# EUROPEAN PATENT SPECIFICATION

(11) **EP 2 772 392 B1**
(45) Date of publication and mention of the grant of the patent: **18.11.2015**
(21) Application number: 14156531.7
(22) Date of filing: 25.02.2014
(51) Int. Cl.: B60Q 1/40

(54) **Signal cancelling device for rocking vehicle**
Signalunterdrückungsvorrichtung für ein seitlich neigbares Fahrzeug
Dispositif d'annulation de signal pour véhicule inclinable latéralement

(30) Priority: 28.02.2013 JP 2013038316
(43) Date of publication of application: 03.09.2014
(73) Proprietor: Honda Motor Co., Ltd., Tokyo 107-8556 (JP)
(72) Inventor: Tetsuka, Takashi, Wako-shi Saitama 351-0193 (JP); Hotei, Takashi, Wako-shi Saitama 351-0193 (JP)
(74) Representative: Stevens, Jason Paul

(56) References cited:
- JP-A- S6 253 256
- JP-A- 2002 087 157
- US-B1- 6 304 804

## Description

The present invention relates to a turn signal cancelling device for a rocking vehicle such as a motorcycle, which can automatically deactivate a turn signal.

Japanese Patent Laid-Open No. Sho 58-47639 discloses determining whether a vehicle is traveling straight or is cornering based in the steering angle of the vehicle's handlebars, and performing turn signal cancellation if it is determined that the vehicle is travelling straight ahead.

Japanese Patent Laid-Open No. Sho 62-53256 discloses using a difference between the rotational speeds of a front wheel and a rear wheel to determine whether a vehicle is traveling straight or is cornering. It is determined that a vehicle is travelling straight when the difference between the rotational speeds of the front wheel and the rear wheel is small, and it is determined that the vehicle is cornering when the difference between the rotational speeds of the front wheel and the rear wheel is large. Automatic turn signal cancellation is performed on the basis of this determination.

However, in the case of a rocking vehicle such as a motorcycle, if an obstacle is detected during cornering, the steering angle of the handlebars may be locally decreased or a difference between the rotational speeds of a front wheel and a rear wheel may be locally decreased, even in the middle of cornering, in order to avoid the obstacle. In this case, the techniques described in Japanese Patent Laid-Open No. Sho 58-47639 and Japanese Patent Laid-Open No. Sho 62-53256 perform turn signal cancellation. Therefore, turn signal cancellation may be performed automatically even during cornering, so that the driver will need to turn on a turn signal again.

An arrangement for turn signal cancellation in a motorcycle is disclosed in US 6304804, and an arrangement for turn signal cancellation in a scooter is disclosed in JP 2002-087157.

It is accordingly an object of at least the preferred embodiments of the present invention to provide a turn signal cancelling device for a rocking vehicle in which the accuracy of turn signal cancellation is improved.

According to a first aspect of the present invention, there is provided a turn signal cancelling device for a rocking vehicle, the turn signal cancelling device comprising: straight-ahead travel or turn determining means for determining whether the rocking vehicle is travelling straight ahead or is turning; turn signal cancellation control means for automatically deactivating a turn signal on a basis of a result of determination of the straight-ahead travel or turn determining means; vehicle speed detecting means for detecting a vehicle speed; and driving force detecting means for detecting a driving force, wherein, when the vehicle speed is equal to or lower than a predetermined speed and the driving force is equal to or larger than a predetermined driving force in a case where the straight-ahead travel or turn determining means determines that the rocking vehicle is turning, the turn signal cancellation control means enters a standby state for automatically deactivating the turn signal, when the straight-ahead travel or turn determining means determines that the rocking vehicle is travelling straight ahead during the standby state, the turn signal cancellation control means automatically deactivates the turn signal, and when the driving force becomes smaller than the predetermined driving force or the turn signal becomes inactive during the standby state, the turn signal cancellation control means cancels the standby state without deactivating the turn signal.

According to this aspect, when the vehicle speed is equal to or lower than the predetermined speed and the driving force is equal to or larger than the predetermined driving force when the rocking vehicle is turning, an automatic deactivation standby state is set. When it is determined that the rocking vehicle is travelling straight ahead during the standby state (that is, the turn is completed), the turn signal is automatically deactivated.

When the driving force becomes smaller than the predetermined driving force or the turn signal becomes inactive during the standby state, the standby state is cancelled. Thus, turn signal cancellation is not performed if sudden obstacle avoidance or the like, which does not involve a driving force equal to or larger than the predetermined driving force, occurs during the turn.

Turn signal cancellation can be performed at the end of normal cornering involving the predetermined driving force, and thus the accuracy of the turn signal cancellation can be improved. The rocking vehicle banks during turning, and the vehicle body is raised from the bank using the driving force of the rear wheel. Thus, when the driver has an intention of ending cornering, a driving force equal to or larger than the predetermined driving force is generated. Turn signal cancellation is not performed when a driving force equal to or larger than the predetermined driving force is not involved, and the accuracy of the turn signal cancellation can thereby be improved.

Preferably, the driving force detecting means is an acceleration detecting means for detecting a vehicle acceleration, and the turn signal cancellation control means determines that the driving force is equal to or larger than the predetermined driving force when the vehicle acceleration is equal to or larger than a predetermined acceleration.

With this arrangement, it can easily be determined whether the driver intends to apply the driving force.

Preferably, the turn signal cancelling device further includes rotational speed detecting means for detecting a rotational speed of a wheel, wherein the acceleration detecting means detects the vehicle acceleration on a basis of the rotational speed detected by the rotational speed detecting means.

This arrangement allows acceleration information to be obtained easily.

Preferably, the rotational speed detecting means detects the rotational speed of a steered wheel.

The rotational speed of the steered wheel (the front wheel of a motorcycle) better reflects the speed with respect to a road surface. Thus, this arrangement allows acceleration with respect to the road surface to be detected accurately.

In a preferred form, the turn signal cancelling device further includes turn signal operating means for giving an instruction to activate or deactivate the turn signal, and the turn signal cancellation control means includes a timer, which is started when an operation of the turn signal operating means for giving an instruction to activate the turn signal is performed, and is reset when the turn signal is deactivated, wherein when the vehicle speed is higher than the predetermined speed and a time counted by the timer is equal to or more than a predetermined time, the turn signal cancellation control means automatically deactivates the turn signal irrespective of the standby state.

A lane change (rather than a turn at an intersection) is considered to be made when the vehicle has a certain vehicle speed during the use of a turn signal. Thus, when the vehicle speed is higher than the predetermined speed and the time counted by the timer is equal to or more than the predetermined time, the turn signal is automatically deactivated. Turn signal cancellation can thus performed at an appropriate time during lane change without the need for the accuracy of straight-ahead travel or turn determination to be increased. In the case of a lane change, the radius of curvature of the turn is very large, and thus a highly accurate straight-ahead travel or turn determination would need to be made if this were to be relied on for turn signal cancellation. However, with this arrangement, turn signal cancellation is performed on the basis of time in the case of a lane change, and so it is unnecessary to increase the accuracy of straight-ahead travel or turn determination.

Preferably, the straight-ahead travel or turn determining means determines whether the rocking vehicle is travelling straight ahead or is turning on a basis of a ratio between rotational speeds of a front wheel and a rear wheel.

With this arrangement, a sensor for detecting whether the rocking vehicle is travelling straight ahead or is turning does not need to be provided separately, which results in lower cost.

A preferred embodiment of the invention will now be described by way of example only and with reference to the accompanying drawings, in which:
FIG. 1 is a side view of a motorcycle which includes a turn signal cancelling device;
FIG. 2 is a functional block diagram of the turn signal cancelling device;
FIG. 3 is a flowchart of an operation of turn signal cancellation based on determination of straight travel or turning by the turn signal cancelling device;
FIG. 4 is a flowchart of an operation of turn signal cancellation which is not based on determination of straight travel or turning by the turn signal cancelling device; and
FIG. 5 is a diagram explaining travel of the motorcycle in an intersection.

A preferred embodiment of a turn signal cancelling device for a rocking vehicle such as a motorcycle will now be described in detail with reference to the accompanying drawings.

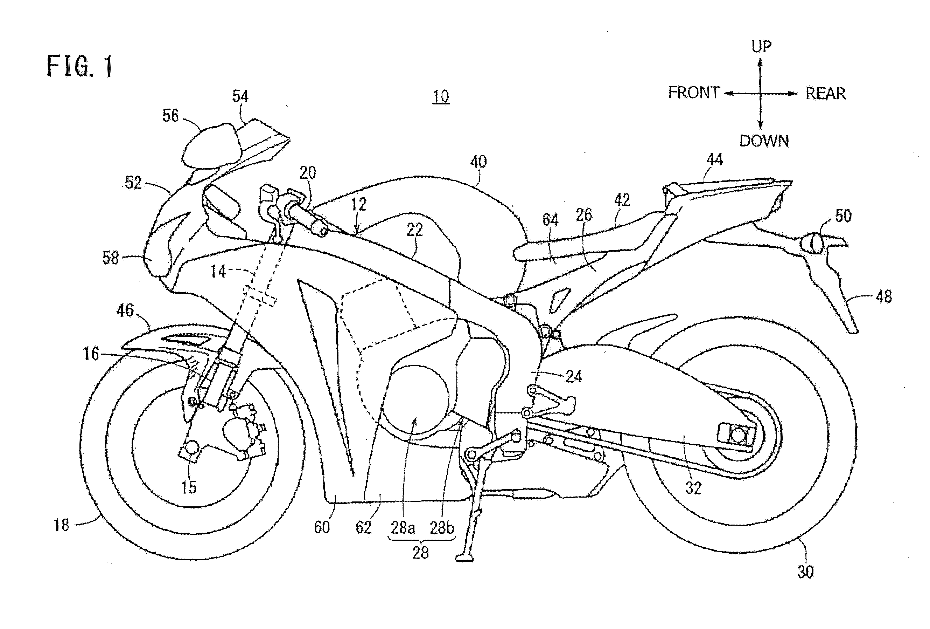

FIG. 1 is a side view of a motorcycle 10 as an example of a rocking vehicle which includes a turn signal cancelling device. Unless indicated to the contrary, the directions "front", "rear", "up" and "down" should be interpreted in accordance with the arrows shown in FIG. 1, the directions "left" and "right" should be interpreted from the viewpoint if a driver sitting on the motorcycle.

The motorcycle 10 includes: a body frame 12; a head pipe 14 provided at a front end of the body frame 12; left and right front fork members 16 rotatably supported by the head pipe 14; a steerable front wheel 18 rotatably supported by the left and right front fork members 16; and steerable handlebars 20 attached to an upper portion of the left and right front fork members 16.

The body frame 12 includes: left and right main frames 22 extending rearwardly from the head pipe 14; left and right pivot plates 24 provided at the rear of the left and right main frames 22; and left and right seat frames 26 provided on the left and right pivot plates 24 and extending rearwardly and obliquely upwardly therefrom. The left and right main frames 22 are provided with a power unit 28 that generates power. A swing arm 32 that rotatably supports a driven rear wheel 30 is swingably supported by the pivot plates 24. The power unit 28 houses an engine 28a and a transmission 28b within a case of the power unit 28.

A fuel tank 40 for storing fuel is provided on the left and right main frames 22. A driver's seat 42 on which a driver can sit is provided to the rear of the fuel tank 40 and on the left and right seat frames 26. A passenger seat 44 on which a passenger can sit is provided to the rear of the driver seat 42. A front fender 46 is provided on the left and right front fork members 16. A rear fender 48 is provided at a rear portion of the left and right seat frames 26, and supports a rear turn signal 50.

The motorcycle 10 further includes: an upper cowl 52 provided on the body frame 12 to protect its front; a windscreen 54 provided on the upper cowl 52; a rear-view mirror 56 provided at an upper portion of the upper cowl 52 so that the driver can see behind the motorcycle; a headlight 58 provided at a front portion of the upper cowl 52 to shine light forwardly; a middle cowl 60 for protecting a front side portion of the motorcycle 10; an under cover 62 provided at a lower portion of the middle cowl 60 and extending rearwardly therefrom; and a side cover 64 provided on the seat frames 26 to cover a region from an upper portion of the seat frames 26 to a lower portion of the driver seat 42. The rear-view mirror 56 includes a front turn signal.

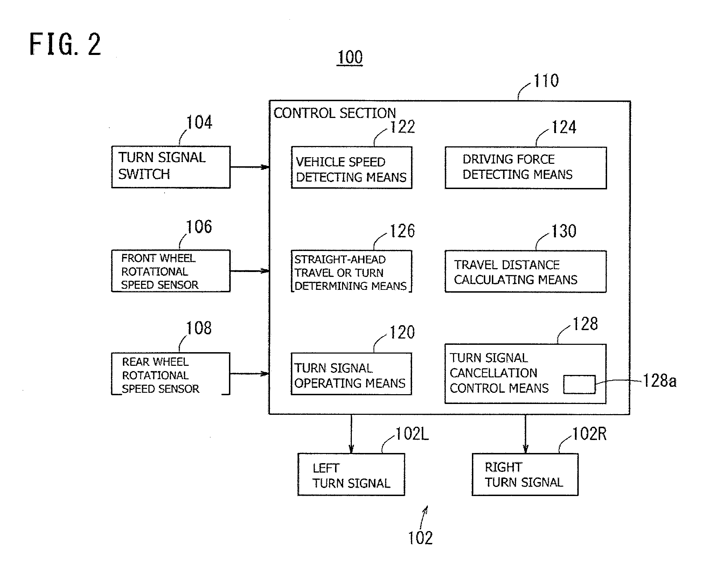

FIG. 2 is a functional block diagram of a turn signal cancelling device 100. The turn signal cancelling device 100 includes a left turn signal 102L, a right turn signal 102R, a turn signal switch (turn signal operating means) 104, a front wheel rotational speed sensor (rotational speed detecting means) 106, a rear wheel rotational speed sensor (rotational speed detecting means) 108, and a control section 110. The left turn signal 102L and the right turn signal 102R may hereinafter be referred to collectively as turn signals 102.

The left turn signal 102L and the right turn signal 102R are each formed by a front turn signal and a rear turn signal 50. That is, the front turn signal has a left front turn signal and a right front turn signal, and the rear turn signal 50 has a left rear turn signal and a right rear turn signal. The left turn signal 102L is formed by the left front turn signal and the left rear turn signal. The right turn signal 102R is formed by the right front turn signal and the right rear turn signal.

The turn signal switch 104 is a switch provided in the vicinity of the handlebars 20 for turning on (including blinking) one of the left turn signal 102L and the right turn signal 102R. The turn signal switch 104 has a lever which is movable in the left-right direction, and which gives an instruction to turn on the left turn signal 102L or the right turn signal 102R. The turn signal switch 104 outputs an operating signal to the control section 110, which signal corresponds to the operation of the switch by the driver.

The front wheel rotational speed sensor 106 is provided on a shaft around which the front wheel 18 rotates. The front wheel rotational speed sensor 106 detects a rotational speed Vrf of the front wheel 18, and outputs the detected rotational speed Vrf to the control section 110. The rear wheel rotational speed sensor 108 is provided on a shaft associated with rotation of the rear wheel 30, such as a countershaft or the like. The rear wheel rotational speed sensor 108 detects a rotational speed Vrr of the rear wheel 30, and outputs the detected rotational speed Vrr to the control section 110. The front wheel rotational speed sensor 106 and the rear wheel rotational speed sensor 108 can also be used for other control such as ABS (Anti-lock Brake System) control and TCS (Traction Control System) control. Incidentally, in a case where the motorcycle 10 is of a motor scooter type, the rear wheel rotational speed sensor 108 may be provided on a gear on the rear wheel 30 side of a centrifugal clutch or the like. Further, while the rotational speeds will be described as circumferential speeds of the wheels, the rotational speeds can be rotational frequencies, sensor pulses, or the like, as long as they are proportional to the rotational speeds.

The control section 110 includes turn signal operating means 120, vehicle speed detecting means 122, driving force detecting means 124, straight-ahead travel or turn determining means 126, turn signal cancellation control means 128, and travel distance calculating means 130. The control section 110 includes at least a computer formed by a CPU or the like (not shown in the Figures) and a memory storing a program and the like. The computer reads the program stored in the memory, and thereby functions as the control section 110 according to the present embodiment.

The turn signal operating means 120 activates and deactivates the left turn signal 102L or the right turn signal 102R according to the operation of the turn signal switch 104. For example, when the driver moves the lever of the turn signal switch 104 to the left to indicate that the vehicle will turn left (a left turn), the turn signal operating means 120 turns on (activates) the left turn signal 102L. Similarly, when the driver moves the lever of the turn signal switch 104 to the right to indicate that the vehicle will turn right (a right turn), the turn signal operating means 120 turns on (activates) the right turn signal 102R. Further, when the lever of the turn signal switch 104 is pressed, the turn signal operating means 120 turns off the left turn signal 102L or the right turn signal 102R.

The vehicle speed detecting means 122 detects the vehicle speed V of the motorcycle 10 using the rotational speed Vrf of the front wheel 18 (as detected by the front wheel rotational speed sensor 106). The vehicle speed detecting means 122 may alternatively detect the vehicle speed V using the rotational speed Vrr of the rear wheel 30 as detected by the rear wheel rotational speed sensor 108.

The driving force detecting means 124 detects a driving force τ. There is a correlation between the driving force τ and the vehicle acceleration A of the motorcycle 10, in that a large vehicle acceleration A means a large driving force τ. Thus, the driving force detecting means 124 in the present embodiment indirectly detects the driving force τ by detecting the vehicle acceleration A; that is, the driving force detecting means 124 functions as acceleration detecting means. The driving force detecting means 124 detects the vehicle acceleration A based on the rotational speed Vrf of the front wheel 18 as detected by the front wheel rotational speed sensor 106, or on the vehicle speed V detected by the vehicle speed detecting means 122. Incidentally, in the present embodiment, the vehicle speed V and the rotational speed Vrf are detected by the same sensor.

The driving force detecting means 124 may instead detect the vehicle acceleration A on the basis of the rotational speed Vrr of the rear wheel 30. Here, driving force τ is not limited to force or torque, but it is sufficient for the driving force τ to indicate the intention of the driver to apply driving force to raise the vehicle body. Hence, the driving force detecting means 124 may be literally a torque sensor that directly detects the driving force τ, or may detect the driving force τ from a degree of opening of an accelerator, or may detect the driving force τ from a degree of opening of a throttle valve of the engine 28a and engine speed. In addition, the driving force detecting means 124 may be an acceleration sensor (G-sensor) for detecting the acceleration, or may detect the driving force τ from an amount of power supplied to a motor in a case of an electric vehicle.

The straight-ahead travel or turn determining means 126 determines whether the motorcycle 10 is travelling straight ahead or is turning. Specifically, the straight-ahead travel or turn determining means 126 calculates a rotational speed ratio Vdiff, which is a ratio (Vrf/Vrr) between the rotational speed Vrf of the front wheel 18 as detected by the front wheel rotational speed sensor 106 and the rotational speed Vrr of the rear wheel 30 as detected by the rear wheel rotational speed sensor 108, and determines whether the motorcycle 10 is travelling straight ahead or is turning according to whether a ratio (Vdiff/Vdiff_s) between the calculated rotational speed ratio Vdiff and a preset rotational speed ratio Vdiff_s in a case where the motorcycle 10 can be estimated to be travelling straight ahead (hereinafter referred to as a straight-ahead travel time rotational speed ratio Vdiff_s) is equal to or lower than a threshold value TH (for example 1.01). Because the rotational speed Vrf and the rotational speed Vrr are the circumferential speeds of the respective tyres, the rotational speed ratio Vdiff is the same value as the straight-ahead travel time rotational speed ratio Vdiff_s when the motorcycle 10 is travelling straight ahead, and the rotational speed ratio Vdiff is a value higher than the straight-ahead travel time rotational speed ratio Vdiff_s when the motorcycle 10 is turning.

The turn signal cancellation control means 128 performs turn signal cancellation based on straight-ahead travel or turn determination, and also performs turn signal cancellation not based on straight-ahead travel or turn determination. Operations of the turn signal cancellations will be described later in detail. Here, "turn signal cancellation" refers to automatically turning off (deactivating) the left turn signal 102L or the right turn signal 102R. The turn signal cancellation control means 128 includes a timer 128a for counting time.

The travel distance calculating means 130 calculates a travel distance L that the motorcycle 10 has travelled since operation of the turn signal switch 104 by the driver to give an instruction to activate a turn signal 102. The travel distance calculating means 130 may calculate the travel distance L by integrating the vehicle speed V as detected by the vehicle speed detecting means 122, or may calculate the travel distance L on the basis of the rotational speed Vrr of the rear wheel 30 as detected by the rear wheel rotational speed sensor 108 or the rotational speed Vrf of the front wheel 18 as detected by the front wheel rotational speed sensor 106.

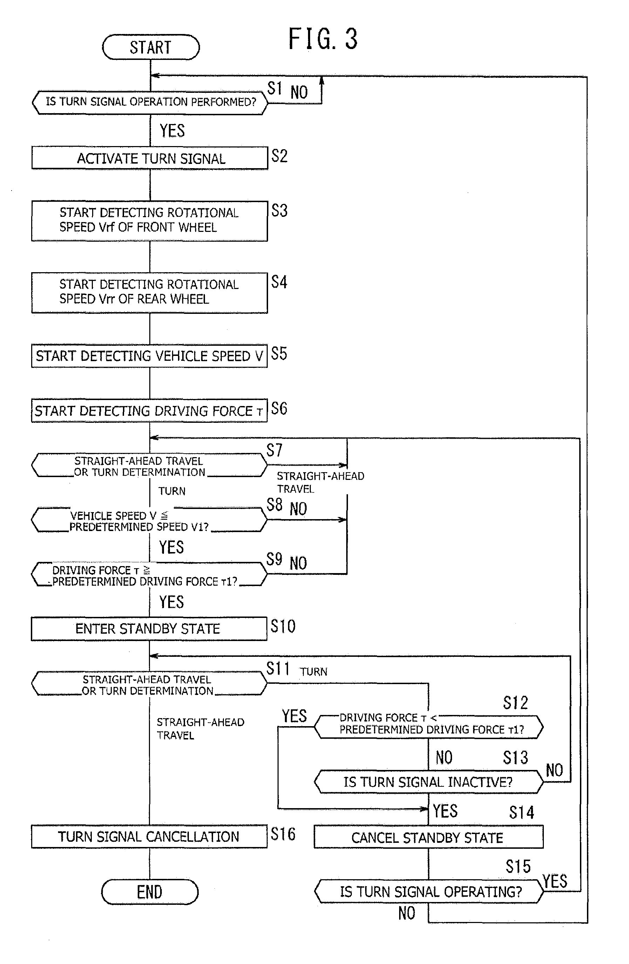

Operation of the turn signal cancellation based on straight-ahead travel or turn determination by the turn signal cancelling device 100 will now be described with reference to the flowchart of FIG. 3.

When the motorcycle 10 is banked during a turn, the vehicle body is raised using the driving force τ of the rear wheel 30. Thus, when the driver has an intention of ending cornering (turning), the motorcycle 10 is generating a certain driving force τ or larger. The turn signal cancellation based on straight-ahead travel or turn determination according to the present embodiment uses this characteristic, so that turn signal cancellation is not performed inappropriately when sudden obstacle avoidance or the like is performed, since this does not involve the certain driving force τ.

First, the turn signal operating means 120 determines whether the turn signal switch 104 is operated (step S1). If it is determined in step S1 that the turn signal switch 104 is not operated, the turn signal operating means 120 remains at step S1 until the turn signal operating means 120 determines that the turn signal switch 104 is operated. If it is determined that the turn signal switch 104 is operated, the turn signal operating means 120 activates a turn signal 102 according to the operation of the turn signal switch 104 (step S2). Further, the timer 128a is started the turn signal switch 104 is operated to give the instruction to activate the turn signal 102 (when the operation of the turn signal 102 is started). The timer 128a is reset when the turn signal 102 is deactivated.

Next, the front wheel rotational speed sensor 106 starts detecting the rotational speed Vrf of the front wheel 18 (step S3). The rear wheel rotational speed sensor 108 starts detecting the rotational speed Vrr of the rear wheel 30 (step S4). The front wheel rotational speed sensor 106 and the rear wheel rotational speed sensor 108 perform the detections in predetermined cycles.

Next, the vehicle speed detecting means 122 starts a process of detecting the vehicle speed V using the rotational speed Vrf of the front wheel 18 as detected in step S3 (step S5). The driving force detecting means 124 starts detecting the driving force τ (step S6). Here, the driving force τ is detected indirectly by detecting the vehicle acceleration A which is correlated with the driving force τ. The driving force detecting means 124 detects the vehicle acceleration A on the basis of the vehicle speed V detected in step S5.

Next, the straight-ahead travel or turn determining means 126 determines whether the motorcycle 10 is travelling straight ahead or is turning (step S7). Specifically, the straight-ahead travel or turn determining means 126 calculates the rotational speed ratio Vdiff (Vdiff = Vrf/Vrr), which is the ratio between the rotational speed Vrf of the front wheel 18 as detected by the front wheel rotational speed sensor 106 and the rotational speed Vrr of the rear wheel 30 as detected by the rear wheel rotational speed sensor 108, and then determines whether the ratio (Vdiff/Vdiff_s) between the calculated rotational speed ratio Vdiff and the straight-ahead travel time rotational speed ratio Vdiff_s is equal to or lower than the threshold value TH. Then, the straight-ahead travel or turn determining means 126 determines that the motorcycle 10 is travelling straight ahead when the ratio (Vdiff/Vdiff_s) between the rotational speed ratio Vdiff and the straight-ahead travel time rotational speed ratio Vdiff_s is equal to or lower than the threshold value TH. The straight-ahead travel or turn determining means 126 determines that the motorcycle 10 is turning when the ratio (Vdiff/Vdiff_s) between the rotational speed ratio Vdiff and the straight-ahead travel time rotational speed ratio Vdiff_s is higher than the threshold value TH.

Incidentally, the motorcycle 10 may be provided with a steering angle sensor for detecting the steering angle of the handlebars 20, and the straight-ahead travel or turn determining means 126 may determine whether the motorcycle 10 is travelling straight ahead or is turning on the basis of a sensor such as the steering angle sensor or a bank angle sensor.

If it is determined in step S7 that the motorcycle 10 is turning, the turn signal cancellation control means 128 determines whether a latest detected vehicle speed V is equal to or lower than a predetermined speed V1, for example 50 km/h (step S8). When entering an intersection, the driver decelerates by applying brakes. Thus, in an intersection, the vehicle speed V is not higher than the predetermined speed V1.

If it is determined in step S8 that the vehicle speed V is equal to or lower than the predetermined speed V1, the turn signal cancellation control means 128 determines whether a latest detected driving force τ is equal to or larger than a predetermined driving force τ1 (step S9). In the present embodiment, the driving force τ is detected indirectly by detecting the vehicle acceleration A. Thus, when the vehicle acceleration A is equal to or larger than a predetermined acceleration A1 (for example 0 km/h per second), the turn signal cancellation control means 128 determines that the driving force τ is equal to or larger than the predetermined driving force τ1. When the driver intends to end a turn at an intersection, the driver accelerates to raise the vehicle body, and thus the vehicle acceleration A becomes equal to or larger than the predetermined acceleration A1.

If it is determined in step S7 that the motorcycle 10 is travelling straight ahead, or if it is determined in step S8 that the vehicle speed V is not equal to or lower than the predetermined speed V1, or if it is determined in step S9 that the driving force τ is not equal to or larger than the predetermined driving force τ1 (that is, it is determined that the vehicle acceleration A is not equal to or larger than the predetermined acceleration A1), the process returns to step S7.

On the other hand, if it is determined in step S9 that the driving force τ is equal to or larger than the predetermined driving force τ1 (that is, when it is determined that the motorcycle 10 is turning, that the vehicle speed V is equal to or lower than the predetermined speed V1, and that the driving force τ is equal to or larger than the predetermined driving force τ1), the turn signal cancellation control means 128 enters a standby state for turn signal cancellation (step S10).

Next, the straight-ahead travel or turn determining means 126 determines whether the motorcycle 10 is travelling straight ahead or is turning (step S11). If it is determined in step S11 that the motorcycle 10 is turning, the turn signal cancellation control means 128 determines whether a latest detected driving force τ is smaller than the predetermined driving force τ1 (step S12).

If it is determined in step S12 that the driving force τ is not smaller than the predetermined driving force τ1, the turn signal cancellation control means 128 determines whether the turn signals 102 (the left turn signal 102L and the right turn signal 102R) are inactive (step S13). The turn signals 102 become inactive when the driver presses the lever of the turn signal switch 104, and thus the turn signal operating means 120 deactivates the turn signals 102.

If it is determined in step S13 that the turn signals 102 are not inactive, the process returns to step S11 to repeat the above-described operations. On the other hand, if it is determined in step S12 that the driving force τ is smaller than the predetermined driving force τ1, or it is determined in step S13 that the turn signals 102 are inactive, the turn signal cancellation control means 128 cancels the standby state (step S14).

If the driving force τ is smaller than the predetermined driving force τ1, then it is likely that obstacle avoidance is being performed, and the standby state is cancelled to prevent turn signal cancellation from being performed on the basis of the temporary straight-ahead travel required to avoid an obstacle. If the turn signals 102 become inactive, the standby state is cancelled because turn signal cancellation does not need to be performed.

Next, the turn signal cancellation control means 128 determines whether a turn signal 102 is operating (step S15). If a turn signal 102 is operating, the process returns to step S7. If the turn signals 102 are inactive (stopped), the process returns to step S1.

If it is determined in step S11 that the motorcycle 10 is travelling straight ahead during the standby state, on the other hand, the turn signal cancellation control means 128 performs turn signal cancellation. That is, the turn signal cancellation control means 128 automatically deactivates the left turn signal 102L or the right turn signal 102R (step S16).

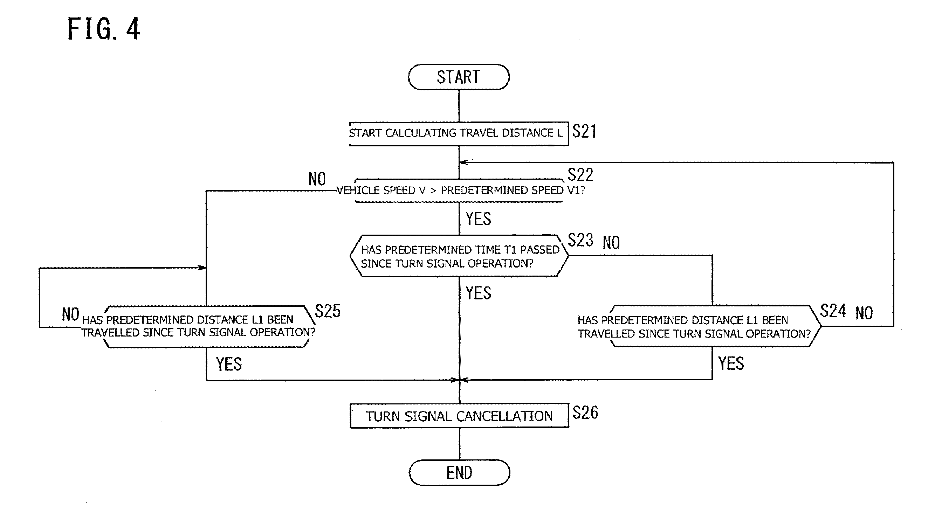

Operation of the turn signal cancellation which is not based on straight-ahead travel or turn determination by the turn signal cancelling device 100 will now be described with reference to the flowchart of FIG. 4.

The operation shown in FIG. 4 is performed when one of the left turn signal 102L and the right turn signal 102R starts operating, and is performed in parallel with the operation shown in FIG. 3.

When the left turn signal 102L or the right turn signal 102R is activated according to an operation of the turn signal switch 104 in step S2 in FIG. 3, the travel distance calculating means 130 starts calculating a travel distance L travelled since the operation of the turn signal switch 104 (step S21). The travel distance L can be calculated by integrating the vehicle speed V detected in step S5 in FIG. 3, or can be calculated by using the rotational speed Vrr of the rear wheel 30 as detected in step S4 in FIG. 3.

Next, the turn signal cancellation control means 128 determines whether the latest vehicle speed V detected in step S5 in FIG. 3 is higher than the predetermined speed V1 (step S22). If the vehicle speed V is higher than the predetermined speed V1, the motorcycle 10 is not considered to be making a turn (left or right) at an intersection.

If it is determined in step S22 that the vehicle speed V is higher than the predetermined speed V1, the turn signal cancellation control means 128 determines whether a predetermined time T1 (for example 7 seconds) has passed since the operation of the turn signal switch 104 (step S23). This determination is made on the basis of the time counted by the timer 128a.

If it is determined in step S23 that the predetermined time T1 has not passed since the operation of the turn signal switch 104, the turn signal cancellation control means 128 determines whether the motorcycle 10 has travelled a predetermined distance L1 (for example 120 m) since the operation of the turn signal switch 104 (step S24). This determination is made on the basis of the travel distance L as calculated by the travel distance calculating means 130.

If it is determined in step S24 that the motorcycle 10 has not travelled the predetermined distance L1 since the operation of the turn signal switch 104, the process returns to step S22 to repeat the above-described operations.

On the other hand, if it is determined in step S22 that the vehicle speed V is not higher than the predetermined speed V1, the turn signal cancellation control means 128 determines whether the motorcycle 10 has travelled the predetermined distance L1 since the operation of the turn signal switch 104 (step S25).

If it is determined in step S25 that the motorcycle 10 has not travelled the predetermined distance L1 since the operation of the turn signal switch 104, the turn signal cancellation control means 128 remains at step S25 until the motorcycle 10 has travelled the predetermined distance L1. When the motorcycle 10 has travelled the predetermined distance L1, the turn signal cancellation control means 128 performs turn signal cancellation (step S26).

When the motorcycle 10 has travelled the predetermined distance L1 since the operation of the turn signal switch 104, it can be considered that the motorcycle 10 has completed a turn (a right turn or a left turn) at an intersection or a lane change operation or the like. Therefore turn signal cancellation is performed. Incidentally, turn signal cancellation is not performed when the turn signals 102 are already inactive (stopped) in step S26.

If it is determined in step S23 that the predetermined time T1 has passed since the operation of the turn signal switch 104, the turn signal cancellation control means 128 performs turn signal cancellation (step S26). When the vehicle speed V has been higher than the predetermined speed V1 since the operation of the turn signal switch 104 until the predetermined time T1 has passed, it can be considered that the motorcycle 10 is not making a turn at an intersection but is instead changing lanes. Thus, turn signal cancellation is performed after the predetermined time T1 has passed since the operation of the turn signal switch 104.

In addition, if it is determined in step S24 that the motorcycle 10 has travelled the predetermined distance L1 since the operation of the turn signal switch 104, the turn signal cancellation control means 128 performs turn signal cancellation (step S26). That is, when the travel distance L has become the predetermined distance L1 with the vehicle speed V higher than the predetermined speed V1 before the predetermined time T1 has passed, turn signal cancellation is performed.

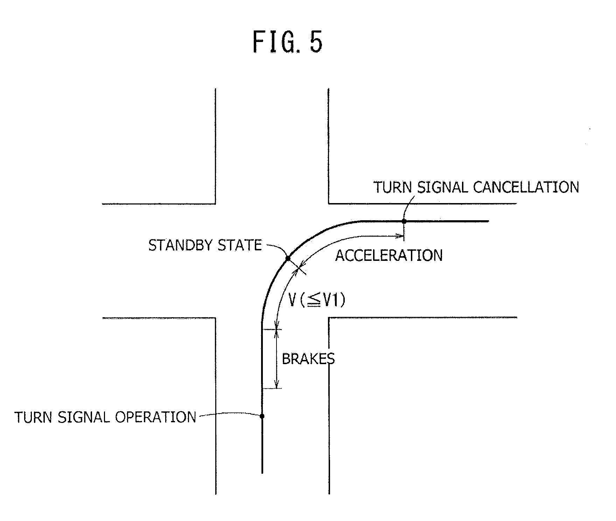

FIG. 5 is a diagram for assisting in the explanation of travel of the motorcycle 10 at an intersection. When the motorcycle 10 approaches the intersection, the driver operates the turn signal switch 104 to turn on a turn signal 102. In the example shown in FIG. 5, the motorcycle 10 makes a right turn. Thus, the driver operates the turn signal switch 104 to turn on the right turn signal 102R.

Then, after operating the turn signal switch 104, the driver decelerates by applying brakes. After entering the intersection, the driver makes a right turn while banking to the right. Thereafter, the driver starts accelerating to raise the motorcycle 10. The driver makes the motorcycle 10 travel straight ahead at a point in time that the right turn is completed.

Hence, in an initial state in which the motorcycle 10 has entered the intersection, the turn signal 102 is operating, the vehicle speed V is equal to or lower than the predetermined speed V1, and the straight-ahead travel or turn determining means 126 determines that the motorcycle 10 is turning. However, before the acceleration is started, the vehicle acceleration A is not equal to or larger than the predetermined acceleration A1, and thus the standby state is not set. Then, the standby state is set for the first time when the acceleration is effected in the intersection. Thereafter turn signal cancellation is performed for the first time when the straight-ahead travel or turn determining means 126 determines that the motorcycle 10 is travelling straight ahead.

In addition, when an operation of the turn signal switch 104 by the user makes the turn signal 102 inactive during the standby state, or when the vehicle acceleration A is smaller than the predetermined acceleration A1 during the standby state, the standby state is cancelled. Thus, turn signal cancellation is not performed even when sudden obstacle avoidance or the like (which does not involve a vehicle acceleration A equal to or larger than the predetermined acceleration A1) occurs during the turn. In this case, when the turn signal 102 is operating, the standby state is set after the obstacle avoidance, and turn signal cancellation is performed when normal cornering involving acceleration is ended.

Thus, when the vehicle speed V is equal to or lower than the predetermined speed V1 and the driving force τ is equal to or larger than the predetermined driving force τ1 in the case where it is determined that the motorcycle 10 is turning, the standby state is set. When it is determined that the motorcycle 10 is travelling straight ahead during the standby state, the turn signal 102 is automatically deactivated. When the driving force τ becomes smaller than the predetermined driving force τ1 or the turn signal 102 becomes inactive during the standby state, the standby state is cancelled. Thus, turn signal cancellation is not performed even if sudden obstacle avoidance which does not involve a driving force τ equal to or larger than the predetermined driving force τ1 occurs during the turn. Turn signal cancellation can be performed at the time of an end of normal cornering involving acceleration, and thus the accuracy of the turn signal cancellation can be improved.

In addition, because it is determined that the driving force τ is equal to or larger than the predetermined driving force τ1 when the vehicle acceleration A is equal to or larger than the predetermined acceleration A1, it can easily be determined whether the driver intends to apply the driving force τ. In addition, because the vehicle acceleration A is detected on the basis of the rotational speed Vrf as detected by the front wheel rotational speed sensor 106 or the rotational speed Vrr as detected by the rear wheel rotational speed sensor 108, acceleration information can be obtained easily. Further, because the rotational speed Vrf of the front wheel 18 (which reflects speed with respect to a road surface) is detected, the vehicle acceleration A with respect to the road surface can be detected accurately.

When the vehicle speed V is higher than the predetermined speed V1 and the time counted by the timer 128a is equal to or more than the predetermined time T1, the turn signal 102 is automatically deactivated. Thus, even in the case of a lane change rather than a turn at an intersection, turn signal cancellation can be performed at an appropriate time without the need for the accuracy of straight-ahead travel or turn determination to be increased. That is, in the case of a lane change, the radius of curvature of the turn is very large, and thus a highly accurate straight-ahead travel or turn determination would need to be made if turn signal cancellation were to be made on that basis. However, the present embodiment performs turn signal cancellation on the basis of time in the case of a lane change, and so an increase the accuracy of straight-ahead travel or turn determination is not necessary.

The foregoing embodiment has been described using the motorcycle 10 as a rocking vehicle. However, the rocking vehicle may be a motor-assisted bicycle, or may be a motor tricycle or the like as long as the vehicle rocks to the inside during cornering. That is, it is sufficient for the rocking vehicle to make a turn while banking the vehicle body.

Although a preferred embodiment of the present invention has been described above, the scope of the present invention is not limited to that embodiment. It will be apparent to those skilled in the art that various changes or improvements can be made to the above-described embodiment, and it will be apparent from the scope of the claims that modes obtained by adding such changes or improvements are also included in the technical scope of the present invention. Furthermore, symbols in parentheses in the claims are given solely for facilitation of understanding of the present invention, and the present invention should not be interpreted as being limited to elements given the symbols.

## Claims

1. A turn signal cancelling device (100) for a rocking vehicle (10), the turn signal cancelling device (100) comprising:
straight-ahead travel or turn determining means (126) for determining whether the rocking vehicle (10) is travelling straight ahead or is turning;
turn signal cancellation control means (128) for automatically deactivating a turn signal (102) on a basis of a result of determination of the straight-ahead travel or turn determining means (126);
vehicle speed detecting means (122) for detecting a vehicle speed; and driving force detecting means (124) for detecting a driving force,
**characterised in that**,
when a turn signal is operating and the vehicle speed is equal to or lower than a predetermined speed and the driving force is equal to or larger than a predetermined driving force in a case where the straight-ahead travel or turn determining means (126) determines that the rocking vehicle (10) is turning, the turn signal cancellation control means (128) enters a standby state, and then
when the straight-ahead travel or turn determining means (126) determines that the rocking vehicle (10) is travelling straight ahead during the standby state, the turn signal cancellation control means (128) automatically deactivates the turn signal (102), and
when the straight-ahead travel or turn determining means (126) determines that the rocking vehicle (10) is turning and the driving force becomes smaller than the predetermined driving force or the turn signal (102) becomes inactive during the standby state, the turn signal cancellation control means (128) cancels the standby state without deactivating the turn signal.

2. The turn signal cancelling device (100) for the rocking vehicle (10) according to claim 1,wherein the driving force detecting means (124) is an acceleration detecting means for detecting a vehicle acceleration, and the turn signal cancellation control means (128) determines that the driving force is equal to or larger than the predetermined driving force when the vehicle acceleration is equal to or larger than a predetermined acceleration.

3. The turn signal cancelling device (100) for the rocking vehicle (10) according to claim 2, further comprising
rotational speed detecting means (106, 108) for detecting a rotational speed of a wheel,
wherein the acceleration detecting means detects the vehicle acceleration on a basis of the rotational speed detected by the rotational speed detecting means (106, 108).

4. The turn signal cancelling device (100) for the rocking vehicle (10) according to claim 3,
wherein the rotational speed detecting means (106) detects the rotational speed of a steered wheel (18).

5. The turn signal cancelling device (100) for the rocking vehicle (10) according to any one of claims 1 to 4, further comprising
turn signal operating means (104) for giving an instruction to activate or deactivate the turn signal (102),
wherein the turn signal cancellation control means (128) includes a timer (128a), the timer (128a) being started when an operation of the turn signal operating means (104) for giving an instruction to activate the turn signal (102) is performed, and being reset when the turn signal (102) is deactivated, and
when the vehicle speed is higher than the predetermined speed and a time counted by the timer (128a) is equal to or more than a predetermined time, the turn signal cancellation control means (128) automatically deactivates the turn signal (102) irrespective of the standby state.

6. The turn signal cancelling device (100) for the rocking vehicle (10) according to any one of claims 1 to 5,
wherein the straight-ahead travel or turn determining means (126) determines whether the rocking vehicle (10) is travelling straight ahead or is turning on a basis of a ratio between rotational speeds of a front wheel and a rear wheel.

## Patentansprüche

1. Fahrtrichtungsanzeiger-Ausschaltvorrichtung (100) für ein seitlich neigbares Fahrzeug (10), wobei die Fahrtrichtungsanzeiger-Ausschaltvorrichtung (100) Folgendes umfasst:
Geradeausfahrt- oder Kurvenbestimmungsmittel (126) zum Bestimmen, ob das seitlich neigbare Fahrzeug (10) geradeaus fährt oder eine Kurve fährt;
Fahrtrichtungsanzeiger-Ausschaltsteuermittel (128) zum automatischen Deaktivieren eines Fahrtrichtungsanzeigers (102) auf einer Basis eines Bestimmungsergebnisses der Geradeausfahrt- oder der Kurvenbestimmungsmittel (126);
Fahrzeuggeschwindigkeitserfassungsmittel (122) zum Erfassen einer Fahrzeuggeschwindigkeit; und
Antriebskrafterfassungsmittel (124) zum Erfassen einer Antriebskraft, **dadurch gekennzeichnet, dass**
wenn ein Fahrtrichtungsanzeiger in Betrieb ist, und die Fahrzeuggeschwindigkeit gleich oder niedriger als eine zuvor bestimmte Geschwindigkeit ist, und die Antriebskraft gleich oder größer als eine zuvor bestimmte Antriebskraft in einem Fall ist, in dem die Geradeausfahrt- oder die Kurvenbestimmungsmittel (126) bestimmen, dass das seitlich neigbare Fahrzeug (10) eine Kurve fährt, die Fahrtrichtungsanzeiger-Ausschaltsteuermittel (128) in einen Bereitschaftszustand eintreten und dann, wenn die Geradeausfahrt- oder Kurvenbestimmungsmittel (126) bestimmen, dass das seitlich neigbare Fahrzeug (10) während des Bereitschaftszustands geradeaus fährt, die Fahrtrichtungsanzeiger-Ausschaltsteuermittel (128) automatisch den Fahrtrichtungsanzeiger (102) deaktivieren, und
wenn die Geradeausfahrt- oder Kurvenbestimmungsmittel (126) bestimmen, dass das seitlich neigbare Fahrzeug (10) eine Kurve fährt, und die Antriebskraft geringer wird, dann die zuvor bestimmte Antriebskraft oder der Fahrtrichtungsanzeiger (102) während des Bereitschaftszustands inaktiv wird, wobei die Fahrtrichtungsanzeiger-Ausschaltsteuermittel (128) den Bereitschaftszustand ausschalten, ohne den Fahrtrichtungsanzeiger zu deaktivieren.

2. Fahrtrichtungsanzeiger-Ausschaltvorrichtung (100) für das seitlich neigbare Fahrzeug (10) nach Anspruch 1, wobei die Antriebskrafterfassungsmittel (124) aus Beschleunigungserfassungsmitteln zum Erfassen einer Fahrzeugbeschleunigung bestehen, und die Fahrtrichtungsanzeiger-Ausschaltsteuermittel (128) bestimmen, dass die Antriebskraft gleich oder größer als die zuvor bestimmte Antriebskraft ist, wenn die Fahrzeugbeschleunigung gleich oder größer als eine zuvor bestimmte Beschleunigung ist.

3. Fahrtrichtungsanzeiger-Ausschaltvorrichtung (100) für das seitlich neigbare Fahrzeug (10) nach Anspruch 2, des Weiteren umfassend
Drehgeschwindigkeitserfassungsmittel (106, 108) zum Erfassen einer Drehgeschwindigkeit eines Rads,
wobei die Beschleunigungserfassungsmittel die Fahrzeugbeschleunigung auf einer Basis der Drehgeschwindigkeit erfassen, die durch die Drehgeschwindigkeitserfassungsmittel (106, 108) erfasst wird.

4. Fahrtrichtungsanzeiger-Ausschaltvorrichtung (100) für das seitlich neigbare Fahrzeug (10) nach Anspruch 3,
wobei die Drehgeschwindigkeitserfassungsmittel (106) die Drehgeschwindigkeit eines gelenkten Rades (18) erfassen.

5. Fahrtrichtungsanzeiger-Ausschaltvorrichtung (100) für das seitlich neigbare Fahrzeug (10) nach irgendeinem der Ansprüche 1 bis 4, des Weiteren umfassend
Fahrtrichtungsanzeiger-Betriebsmittel (104), die eine Anweisung, den Fahrtrichtungsanzeiger (102) zu aktivieren oder zu deaktivieren, erteilen,
wobei die Fahrtrichtungsanzeiger-Ausschaltsteuermittel (128) einen Zeitschalter (128a) aufweisen, wobei der Zeitschalter (128a) gestartet wird, wenn eine Operation der Fahrtrichtungsanzeiger-Betriebsmittel (104) zum Erteilen einer Anweisung, den Fahrtrichtungsanzeiger (102) zu aktivieren, durchgeführt wird, und zurückgesetzt wird, wenn der Fahrtrichtungsanzeiger (102) deaktiviert ist, und
wenn die Fahrzeuggeschwindigkeit höher als die zuvor bestimmte Geschwindigkeit ist, und der Zeitschalter (128a) eine Zeit gemessen hat, die gleich einer zuvor bestimmten Zeit oder länger als diese ist, die Fahrtrichtungsanzeiger-Ausschaltsteuermittel (128) den Fahrtrichtungsanzeiger (102) unabhängig von dem Bereitschaftszustand automatisch deaktivieren.

6. Fahrtrichtungsanzeiger-Ausschaltvorrichtung (100) für das seitlich neigbare Fahrzeug (10) nach irgendeinem der Ansprüche 1 bis 5,
wobei die Geradeausfahrt- oder Kurvenbestimmungsmittel (126) auf einer Basis eines Verhältnisses zwischen der Drehgeschwindigkeit eines Vorderrades und der eines Hinterrades bestimmen, ob das seitlich neigbare Fahrzeug (10) geradeaus fährt oder eine Kurve fährt.

## Revendications

1. Dispositif d'annulation de signal de direction (100) pour un véhicule inclinable latéralement (10), le dispositif d'annulation de signal de direction (100) comprenant :
des moyens de détermination de déplacement droit devant ou en rotation (126) pour déterminer si le véhicule inclinable latéralement (10) se déplace droit devant ou en rotation ;
des moyens de commande d'annulation de signal de direction (128) pour désactiver automatiquement un signal de direction (102) sur la base du résultat de la détermination des moyens de détermination de déplacement droit devant ou en rotation (126) ;
des moyens de détection de vitesse de véhicule (122) pour détecter une vitesse du véhicule ; et des moyens de détection de force d'entraînement (124) pour détecter une force d'entraînement,
**caractérisé en ce que**,
lorsqu'un signal de direction est en cours, que la vitesse du véhicule est égale ou inférieure à une vitesse prédéterminée et que la force d'entraînement est égale ou supérieure à une force d'entraînement prédéterminée dans le cas où les moyens de détermination de déplacement droit devant ou en rotation (126) déterminent que le véhicule inclinable latéralement (10) effectue une rotation, les moyens de commande d'annulation de signal de direction (128) entrent dans un état de réserve, puis,
lorsque les moyens de détermination de déplacement droit devant ou en rotation (126) déterminent que le véhicule inclinable latéralement (10) se déplace droit devant au cours de l'état de réserve, les moyens de commande d'annulation de signal de direction (128) désactivent automatiquement le signal de direction (102) et,
lorsque les moyens de détermination de déplacement droit devant ou en rotation (126) déterminent que le véhicule inclinable latéralement (10) tourne et que la force d'entraînement devient plus petite que la force d'entraînement prédéterminée ou que le signal de direction (102) devient inactif au cours de l'état de réserve, les moyens de commande d'annulation de signal de direction (128) annulent l'état de réserve sans désactiver le signal de direction.

2. Dispositif d'annulation de signal de direction (100) pour le véhicule inclinable latéralement (10) selon la revendication 1, dans lequel les moyens de détection de force d'entraînement (124) sont des moyens de détection d'accélération pour détecter l'accélération du véhicule et les moyens de commande d'annulation de signal de direction (128) déterminent que la force d'entraînement est égale ou supérieure à la force d'entraînement prédéterminée lorsque l'accélération du véhicule est égale ou supérieure à une accélération prédéterminée.

3. Dispositif d'annulation de signal de direction (100) pour le véhicule inclinable latéralement (10) selon la revendication 2, comprenant en outre :
des moyens de détection de vitesse de rotation (106, 108) pour détecter la vitesse de rotation d'une roue,
dans lequel les moyens de détection d'accélération détectent l'accélération du véhicule sur la base de la vitesse de rotation détectée par les moyens de détection de vitesse de rotation (106, 108).

4. Dispositif d'annulation de signal de direction (100) pour le véhicule inclinable latéralement (10) selon la revendication 3,
dans lequel les moyens de détection de vitesse de rotation (106) détectent la vitesse de rotation d'une roue dirigée (18).

5. Dispositif d'annulation de signal de direction (100) pour le véhicule inclinable latéralement (10) selon l'une quelconque des revendications 1 à 4, comprenant en outre :
des moyens d'actionnement de signal de direction (104) pour donner une instruction afin d'activer ou désactiver le signal de direction (102),
dans lequel les moyens de commande d'annulation de signal de direction (128) comprennent une minuterie (128a), la minuterie (128a) étant initiée lorsque le fonctionnement des moyens d'actionnement de signal de direction (104) pour donner une instruction afin d'activer le signal de direction (102) est effectué et étant remise à zéro lorsque le signal de direction (102) est désactivé, et,
lorsque la vitesse du véhicule est supérieure à la vitesse prédéterminée et que le temps décompté par la minuterie (128a) est égal ou supérieur à un temps prédéterminé, les moyens de commande d'annulation de signal de direction (128) désactivent automatiquement le signal de direction (102) indépendamment de l'état de réserve.

6. Dispositif d'annulation de signal de direction (100) pour le véhicule inclinable latéralement (10) selon l'une quelconque des revendications 1 à 5,
dans lequel les moyens de détermination de déplacement droit devant ou en rotation (126) déterminent si le véhicule inclinable latéralement (10) se déplace droit devant ou tourne sur la base d'un rapport entre les vitesses de rotation d'une roue avant et d'une roue arrière.
